# EUROPEAN PATENT APPLICATION

(11) **EP 2 503 153 A2**
(43) Date of publication of application: **26.09.2012**
(21) Application number: 12158767.9
(22) Date of filing: 09.03.2012
(51) Int. Cl.: F04D 13/06

(54) **Motor, pump using the pump, and apparatus using the motor or the pump**

(30) Priority: 25.03.2011 JP 2011068376
(71) Applicant: Panasonic Corporation, Osaka 571-8501 (JP)
(72) Inventor: Hirata, Masahiro, Chuo-ku, Osaka 540-6207 (JP); Seki, Takafumi, Chuo-ku, Osaka 540-6207 (JP); Kuroki, Koji, Chuo-ku, Osaka 540-6207 (JP); Asanishi, Makoto, Chuo-ku, Osaka 540-6207 (JP)
(74) Representative: Appelt, Christian W.

(57) **Abstract**

The motor comprises a stator having a core which is realized by plate like members which are stacked, a rotor rotated by the stator, and the division wall having a cylindrical shape and located between the rotor and the stator. The division wall has an inclination inclined with respect to the axial direction. The core comprises teeth having a magnetic pole surface faced to the circumference surface of the rotor through the division wall. The teeth comprise first extending members and second extending members. At least one of magnetic pole surfaces of the first extending member and the second extending member has the inclination inclined with respect to the axial direction.

## Description

### TECHNICAL FIELD

This invention relates to a motor, a pump comprising the motor, and an apparatus comprising the motor or the pump.

### BACKGROUND ART

The patent literature 1 (explained below) discloses the conventional pump which comprises a motor as a driving source. The pump comprises the impeller for taking and sending the liquid, the rotor which is fixed to the impeller and which rotates the impeller, the stator having teeth formed with a coil, and a division plate which separates the rotor from the stator. The division plate is made of resin. The division plate has a thin thickness. Consequently, the division plate is manufactured at low cost, compared with the division plate which is made of metal and which is formed by the method such as machining and deep drawing. The division plate has a cylindrical portion which is located between the rotor and the stator to separate the rotor from the stator in the radial direction. In addition, the cylindrical portion has a cylindrical portion outer circumference surface. The cylindrical portion outer circumference surface has a taper along a center axis of the radius of the cylindrical portion. In this pump, the cylindrical portion has the taper which is set to be great. Consequently, the adhesion and the breakage of the division wall with respect to the molding caused by decreasing the thickness of the division wall

### CITATION LIST

PATENT LITERATURE 1 JP2009-284704A

### SUMMARY OF INVENTION

### TECHNICAL PROBLEM

However, the conventional motor in the pump explained above has the taper which is set to be great. Therefore, it is difficult to reduce the gap in the radial direction between the stator and the rotor through the division wall. (The gap is so called the air gap.) Therefore, it is difficult to improve the efficiency of the motor.

In view of the above, a problem of this invention is to produce the motor which is improved its efficiency by reducing the air gap. In addition, another problem is to produce the pump comprising such the motor. Furthermore, yet another problem is to produce the apparatus comprising such the motor or such the pump.

### SOLUTION TO PROBLEM

In order to solve the problem, a motor of this invention comprises a stator, a rotor, and a division wall. The stator comprises a core. The core has a plurality of plate members which are stacked. The rotor is configured to be rotated by the stator. The division wall is located between the rotor and the stator in a radial direction of a rotation axis of the rotor. The division wall has a cylindrical shape. The division wall has an inclination inclined with respect to the axial direction of a center of the rotation axis. The rotor has a circumference surface extending in a rotation direction of the rotor. The core comprises a magnetic pole member. The magnetic pole member has a magnetic pole surface. The magnetic pole surface is faced to the circumference surface through the division wall. The magnetic pole member comprises a base member, a first extending member, and a second extending member. The core has an end portion which is located in a rotor side. The base member is provided to the end portion. The base member has one end portion in the axial direction and the other end portion in the axial direction, the one end portion in the axial direction of the base member being defined as a first portion, the other end portion in the axial direction of the base member being defined as a second portion. The first extending member extends in the axial direction from a first portion of the end portion of the base member. The second extending member extends in the axial direction from a second portion of the end of the base member. The magnetic pole surface in at least one of the first extending member and the second extending member has the inclination with respect to the axial direction.

In this motor, it is preferred that the first extending member has a tip. The second extending member has a tip. The radial size of the magnetic pole surface of the tip of the first extending member is set to be greater than a radial size of the magnetic pole surface of the tip of the second extending member.

In this motor, it is preferred that the magnetic pole surface has the inclination such that the magnetic pole surface of the first extending member extends in parallel with the division wall. The magnetic pole surface of the second extending member has an inclination such that the magnetic pole surface of the second extending member extends in parallel with the division wall.

In this motor, it is preferred that the circumference surface of the rotor has an inclination such that the circumference surface of the rotor extends in parallel with the division wall.

In addition, the pump of this invention comprises the above motor.

In addition, the apparatus of this invention comprises the above motor.

In addition, the apparatus of this invention comprises the above pump.

### ADVANTAGEOUS EFFECTS OF INVENTION

The above configuration makes it possible to easily reduce the air gap. Consequently, it is possible to easily improve the efficiency of the motor.

### BRIEF DESCRIPTION OF DRAWINGS

Fig. 1 shows the side cross sectional view of the motor in the first embodiment.
Fig. 2 shows the perspective view of the core of the motor of the above.
Fig. 3 shows the side cross sectional view of the motor of the second embodiment.
Fig. 4 shows the perspective view of the motor, with omission in a part of the motor, of the third embodiment.
Fig. 5 shows the perspective view of the core of the motor in the above.
Fig. 6A shows the explanation of the relationship between the cogging torque and the rotation angle of the motor in the third embodiment.
Fig. 6B shows the explanation of the relationship between the cogging torque and the rotation angle of the motor in the comparative example.
Fig. 7 shows the side cross sectional view of the pump in the fourth embodiment.
Fig. 8 shows the explanation of the configuration of the apparatus of the fifth embodiment.
Fig. 9 shows the explanation of the configuration of the apparatus of the sixth embodiment.
Fig. 10 shows the explanation of the configuration of the apparatus of the seventh embodiment.

### MODES FOR CARRYING OUT THE INVENTION

The explanations of the embodiments of this invention are, hereinafter, made with attached drawings.

### (FIRST EMBODIMENT)

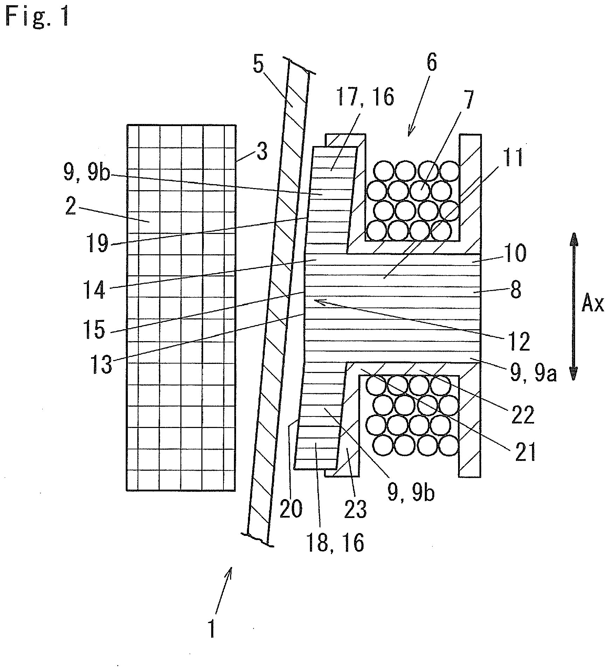

The motor **1** in this embodiment shown in Fig. 1 comprises a stator **6,** a rotor **2,** a division wall **5,** and an axial member (not shown in the drawing). The stator **6** is configured to generate a magnetic field. The rotor **2** is rotated by the magnetic field generated by the stator **6.** The division wall **5** is disposed between the rotor **2** and the stator **6.** The axial member is defined as a center of a rotation axis of the rotor **2.**

The rotor **2** is formed to have an approximately cylinder. The rotor **2** has a plurality of magnets which are arranged in a circumferential direction. (The magnets are not shown in the drawing.) The rotor **2** is shaped such that the axial member penetrates through the cylinder, whereby the axial member is located within the cylinder. In addition, the axial member and the rotor are set to be concentric with respect to each other. The rotor **2** is supported by the axial member such that the rotor **2** is rotatable about the axial member. In addition to the above, the rotor **2** is rotated by the stator **6** about the rotation center which is defined by the axial member. In the following explanation, except for the particular definition, the axial direction **Ax** of the rotor is defined as the axial direction **Ax**. The circumferential direction of the rotor **2** is defined as the circumferential direction. The direction from the axial center of the rotor to the outer circumference of the rotor is defined as the radial-outward direction. The direction from the outer circumference of the rotor to the axial center of the rotor is defined as the radial-inward direction. In addition, as a matter of convenience, the front view shape is defined by the shape when seen in the axial direction **Ax**.

The division wall **5** is shaped to have a cylinder which has a diameter which is set to be greater than a diameter of the rotor **2**. The division wall **5** is shaped such that the rotor **2** is disposed within an inside circumference of the division wall **5**. In addition, the rotor **2** and the division wall **5** are disposed to be concentric with respect to each other. The stator **6** is disposed on an outside of an outer circumferential surface of division wall **5**. The division wall **5** is configured to separate "a space in which the rotor **2** is disposed" from "a space in which the stator **6** is disposed" in the radial direction. In addition, the division wall **5** is manufactured by means of a molding with using the resin material. The division wall **5** has a draft in the axial direction **Ax** in order to improve the demolding property of demolding the division wall **5** from the die. Therefore, the division wall **5** has "one end in the axial direction which is defined as the first end" and "the other end in the axial direction which is defined as the second end". The diameter in the first end is set to be greater than the diameter in the second end.

The stator **6** comprises a core **8**, a coil **7**, and an electrical insulation member **21**. The core **8** is made of metal material having magnetic property. The coil **7** is formed by a wounded conducting wire for excitation of creating the magnetic field. The electrical insulation member **21** is configured to electrically insulate the core **8** from the coil **7**.

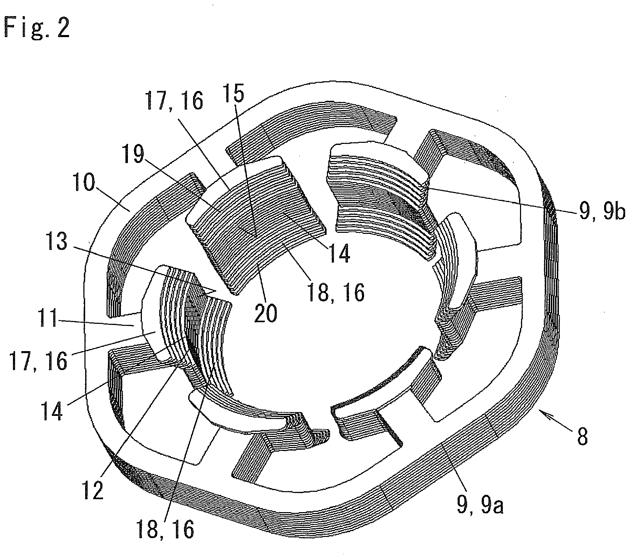

The core **8** shown in Fig. 2 has a main component which comprises a circularity member **10**, teeth **11**, and a magnetic pole member **12**. The circularity member **10** has the axial center extending in the axial direction **Ax**. The circularity member **10** has the axial center which is set to be concentric with respect to the rotor **2**. The circularity member **10** has circularity when seen in the front view. The teeth **11** are projected to the radial inward direction from the inside circumference surface of the circularity member **10**. The teeth **11** have an end portion which is located on the side of the rotor **2**. The magnetic pole member **12** is provided to the end portion on the side of the rotor **2** of the teeth **11**. In addition, the core **8** is formed by first plate shape members **9a** (plate-like members **9**) which are stacked in the axial direction **Ax**. The first plate shape member **9a** comprises a part of the magnetic pole member **12**, the circularity member **10**, and the teeth **11** which are cooperative with each other to construct one unit.

The teeth **11** are each extended in the radial inward direction from the core **8**, and are each shaped to have rectangular column shapes. In addition, the teeth **11** are arranged in the circumferential direction at the regular intervals. In addition, each one of the teeth has a side surface extending in the projection direction. (Each one of the teeth has a side surface extending in the radial inward direction.) The conducting wire which constructs the coil **7** is wounded to each one of the teeth **11** so as to surround the side surface of each the teeth **11** through the electrical insulation member **21**. In addition, each one of the teeth has a projecting tip which is located on the same side as the rotor **2**. The magnetic pole member **12** is provided to the projecting tip.

The magnetic pole member **12** has a size in the circumferential direction which is greater than a size in the circumferential direction of the teeth **11**. The magnetic pole member **12** has a circular arc shape when seen in the front view. The circular arc of the magnetic pole has a concentric with respect to the rotor **2**. The size in the axial direction of the magnetic pole member **12** is set to be approximately equal to the size in the axial direction **Ax** of the magnet. Therefore, inner circumferential surface of the circular arc of the magnetic pole member **12** is defined as the magnetic pole surface **13**. The magnetic pole surface **13** is faced to the outer circumferential surface of the rotor in the radial inward direction. The magnetic pole surface **13** is faced to the outer circumferential surface of the rotor **2** through the division wall **5**.

In addition, the magnetic pole member **12** comprises a main component which comprises a base member **14** and extending members **16**. The base member **14** is coupled to the projecting tip of the teeth **11**. The base member **14** has end portions in both ends of the axial direction **Ax**. The extending members **16** are attached to both the end portions, respectively. Specifically, the two extending members **16** are provided to each the base member **14**.

The base member **14** has an approximately intermediate portion in the circumferential direction of the circular arc, and is connected at its approximately intermediate portion with the teeth **11**. The base member **14** has a size in the axial direction **Ax** which is approximately equal to the size of the teeth in the axial direction **Ax**. The first plate shape members **9a** are stacked in the axial direction **Ax** to form the core **8** and the teeth **11**. The core **8** and the teeth **11** are defined as one unit. In addition, the base member **14** has end portions of the circular arc which are each projected in the circumferential direction from the connection portion of the teeth **11** and the base member **14**. The end portion of the circular arc has a size which is approximately equal to the size of the base member **14**. The base member **14** has an end side which is located in the end portion of the circular arc. (The end side of the base member **14** is defined by the side formed by the stacking.) The end side of the base member **14** is arranged approximately in parallel with the axial direction **Ax**. The magnetic pole surface **15** of the base member **14** has an approximately rectangular shape when seen in the radial outward direction which passes through a center of the magnetic pole surface **15**.

In addition, the base member **14** has axial ends in the axial direction **Ax**, the axial ends being defined as the end surfaces. (One of the axial ends is defined as the first end surface and the other of the axial ends is defined as the second end surface.) The base member **14** is provided at its end surfaces with the recesses, respectively. (The recesses are not shown in the figures.) The extending member **16** is provided with a projection (which is not shown). The projection of the extending member **16** is engaged with the recess. Consequently, the extending members **16** are attached to the end surfaces.

The extending portion **16** is formed the second plate shape members **9b** which are stacked in the axial direction **Ax**. (The second plate shape member **9b** is, in other words, the plate like member **9**.) The second plate shape member **9b** has a circular arc shape which is approximately same as the shape of that of the base member **14**. In addition, the second plate shape member **9b** having the circular arc shape has a size which is approximately same as that of the base member **14**. The second plate shape member **9b** has the shape which is different from the shape of the first plate shape member **9a**. In addition, the two extending members **16** of each the base member **14** comprises the first extending member **17** and the second extending member **18** which are distinguished from each other. The first extending member **17** is attached to the first end surface in the axial direction of the base member **14**. The second extending member **18** is attached to the second end surface in the axial direction of the base member. The second end surface is opposite of the first end surface.

The first extending member **17** is formed by the second plate shape members **9b**. The second plate shape members **9b** are stacked in the axial direction **Ax** and are displaced in the radial outward direction continuously at approximately regular intervals. Consequently, the second plate shape member **9b** is arranged to have a stair-like manner such that the extending tip side is projected to the radial outward direction.

Consequently, in the first extending member **17**, when the imaginary line which connects the end portions in the circumferential directions of the second plate shape members **9b** in the axial direction **Ax** is formed, the imaginary line which is defined by the straight line is inclined with respect to the axial direction **Ax** such that the projecting tip is directed to the radial outward direction. In addition, the straight line is approximated straight line of the end surface of the magnetic pole surface **19**. Therefore, the first extending member **17** has a shape having an inclination inclined with respect the axial direction such that the end side of the magnetic pole surface **19** is inclined with respect to the axial direction **Ax** to be directed to the radial outward direction.

The second extending member **18** is formed by the second plate shape members **9b**. The second plate shape members **9b** are stacked in the axial direction **Ax** and are displaced in the radial inward direction continuously at approximately regular intervals. Consequently, the second plate shape member **9b** is arranged to have a stair-like manner such that the extending tip side is projected to the radial inward direction.

Consequently, in the second extending member **18**, when the imaginary line which connects the end portions in the circumferential directions of the second plate shape members **9b** in the axial direction **Ax** is formed, the imaginary line is defined by the straight line which is inclined with respect to the axial direction **Ax** such that the projecting tip is directed to the radial inward direction. In addition, the straight line is approximated straight line of the end surface of the magnetic pole surface **20**. Therefore, the second extending member **18** has a shape having an inclination inclined with respect the axial direction such that the end side of the magnetic pole surface **19** is inclined with respect to the axial direction **Ax** to be directed to the radial inward direction.

Furthermore, the end side of the first extending member **17** and the end side of the second extending member **18** have inclinations, respectively. The inclination of the end of the first extending member **17** and the inclination of the end of the second extending member **18** are approximately in parallel with each other when seen in the circumferential direction. The magnetic pole surfaces **19**, **20** of both the extending member **16** have the shapes approximately same as each other. (The magnetic pole surface **19** of the first extending member **17** has the shape which is approximately same as the shape of the magnetic pole surface **20** of the second extending member **18**.) The extending tips of both the extending member **16** are projected in the radial direction, and extend to a direction opposite of each other. The extending tip is projected toward the base member **14**.

In addition, both the magnetic pole surfaces **19**, **20** of the both the extending members **16** are, as shown in Fig. 1, located approximately in parallel with the division wall **5** in the axial direction **Ax**. Consequently, the second extending member **18** is positioned such that the magnetic pole surface **20** of the second extending member **18** is positioned to be in contact with the outer circumference surface of the division wall **5**. Or, the second extending member **18** is positioned such that the magnetic pole surface **20** of the second extending member **18** is positioned to be close to the outer circumference surface of the division wall **5**.

The electrical insulation member **21** comprises a main component which comprises a teeth covering member **22** and a magnetic pole covering member **23**. The teeth covering member **22** has a cylindrical shape to cover the side surface of the teeth **11**. The teeth covering member **22** has an end portion located on the side of the radial inward direction in the motor **1**. The magnetic pole covering member **23** is provided to the end portion of the teeth covering member **22**. In addition, the electrical insulation member **21** is formed by the resin having the electrical insulation property, whereby the electrical insulation member **21** electrically insulates the coil **7** from the core **8**. The magnetic pole covering member **23** covers the outer surface, except for the magnetic pole **13** of the magnetic pole member **12**. In addition, the magnetic pole covering member **23** is disposed to be in contact with the inclined outer circumference surface of the extending member **16**. The magnetic pole covering member **23** is configured to add the strength of the extending member **16** from the outer circumference of the extending member **16.** Consequently, the magnetic pole member **12** is prevented its deformation by the magnetic pole covering member **23**.

As explained above, the motor **1** comprises the extending members **16** on both the end portions in the axial direction **Ax** of the base member **14**. In addition, both the extending member **16** has the magnetic pole surface **19**, **20** which have the inclinations inclined with respect to the axial direction **Ax**. Therefore, compared with the magnetic pole surface without the inclination, the stator **6** is easily arranged such that the magnetic pole surface **13** of the magnetic pole member **12** is arranged close to the circumference surface **3** of the rotor **2**. Consequently, it is possible to prevent the growth in the size of the motor. Therefore, it is possible to easily reduce the air gap and to improve the efficiency of the motor.

In addition, the teeth **11** and the base member **14** are formed by the first plate shape members **9a**. In addition, the extending member **16** is formed by the second plate shape member **9b**. Consequently, it is possible to reduce the size of the teeth, compared with the magnetic pole surface **13** of the magnetic pole member **12**. In addition to the above, according to the extending member **16** of the magnetic pole member **12**, it is possible to set "the size in the axial direction of the magnetic pole surface **13**" which is approximately equal to "the size of the magnet in the axial direction" even if "the size (axial size) of the base member **14** in the axial direction **Ax**" is reduced to be smaller than "the size of the magnet in the axial direction". Therefore, it is possible to prevent " the growth in size of the coil **7**" due to " the increase of the width of winding the conducting wire according to the growth in size of the teeth **11**". Consequently, it is possible to easily ensure the winding space for winding the conducting wire around the teeth **11**.

In addition, the division wall **5** is not limited its material to the resin. That is, it is possible to form the division wall **5** by the metal. In addition, the inclination of the division wall **5** is not limited to the draft. Furthermore, the attachment of the extending member **16** with respect to the base member **14** is not limited to the engagement of the recess with the projection. It is possible to establish the attachment of the extending member **16** to the base member **14** by the swage of fastening by the hammering. It is also possible to employ the holding fixture such as the pin. In addition, it is also possible to establish the attachment of the extending member **16** to the base member **14** by the laser adhesion and the adhesive joining. In addition, the attachment of the extending member **16** to the base member **14** is not limited to the exemplified configurations. In addition, it is possible to only one of the two extending members **16** has the inclination with respect to the axial direction.

In addition, the motor **1** is not limited to, so called, the inner rotor type, shown in Fig. 1, having the rotor **2** disposed in an inside of the inner circumference of the stator **6**. It is possible to employ the motor of, so called, the outer rotor type having the rotor **2** in an outside of the outer circumference surface of the stator **6**. That is, the type of the motor is not limited to the exemplified configuration.

### (SECOND EMBODIMENT)

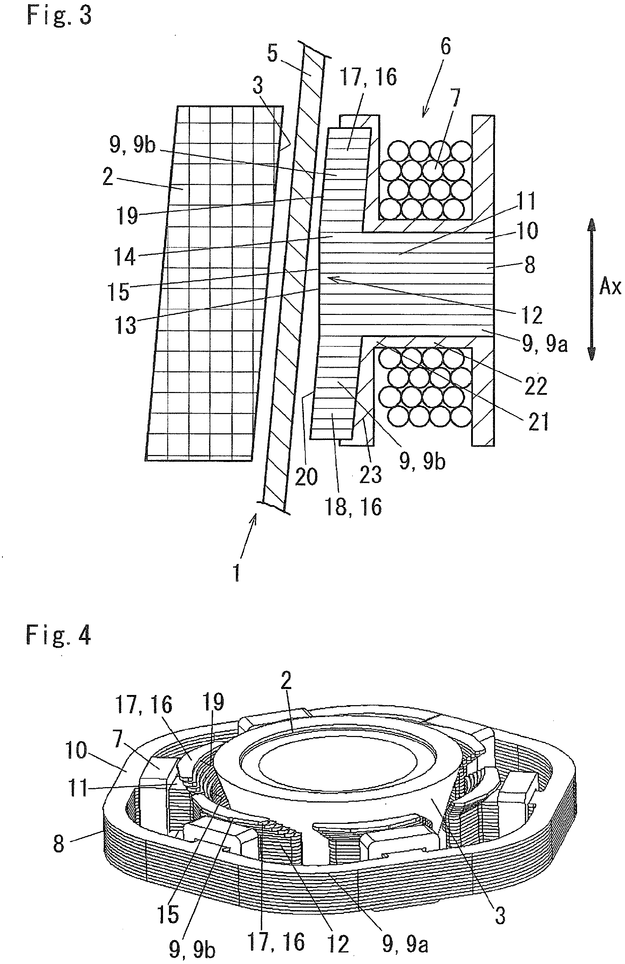

The motor **1** in the second embodiment is explained with attached Fig. 3. It is noted that the configurations of the second embodiment in common with or equivalent to the configuration of the first embodiments are symbolized by the same reference signs. Therefore, the repetitions of the explanations of them are omitted. In addition, the references of the direction are defined similar to that in the first embodiment.

The motor **1** of this embodiment comprises the rotor **2** which is defined as the main body. The rotor **2** is a molding product made of composite of the magnetic material and the resin material. Since the rotor **2** is the molding product, the rotor **2** has the circumference surface which has the draft formed by the die. The draft is inclined with respect to the axial direction **Ax**. Therefore, the rotor **2** has a first end portion having an external diameter and a second end portion having an external diameter. The external diameter of the first end portion is greater than the external diameter of the second end portion. The rotor **2** has a cylindrical shape to have the circumference surface which is inclined. (Specifically, the rotor **2** has a cylindrical shape and a circular truncated cone shape to have the circumference surface which is inclined.) In addition, the draft of the rotor **2** is formed to have an angle approximately equal to an angle of the draft of the division wall **5.** The circumference surface **3** of the rotor **2** is positioned to be approximately in parallel with the inner circumference surface of the division wall **5**.

In addition, the stator **6** is disposed in an outside of the outer circumference of the rotor **2** through the division wall **5**. The magnetic pole member **12** of the core **8** of the stator **6** comprises the first extending member **17** and the second extending member **18**. The first extending member **17** has the magnetic pole surface **19** which has an inclination which is inclined with respect to the axial direction **Ax**. Consequently, the first extending member has a diameter which gradually becomes greater toward the extending tip. The second extending member **18** has the magnetic pole surface **20** which has an inclination which is inclined with respect to the axial direction **Ax**. Consequently, the second extending member **18** has the diameter which gradually becomes smaller toward the extending tip.

As explained above, the circumference surface **3** of the rotor **2** has the inclination which is inclined with respect to the axial direction **Ax.** The division wall **5** has the inclination which is inclined with respect to the axial direction **Ax**. The inclination of the circumference surface **3** of the rotor **2** is approximately in parallel with the inclination of the circumference surface **3** of the division wall **5.** Therefore, it is possible to easily reduce the gap, in the radial direction, of the rotor **2** and the division wall **5**. Therefore, for example, it is possible to arrange the stator **6** and the rotor **2** which are close to each other by reducing the diameter of the division wall **5**. Consequently, it is possible to reduce the air gap. This results in the improvement of the efficiency of the motor.

### (THIRD EMBODIMENT)

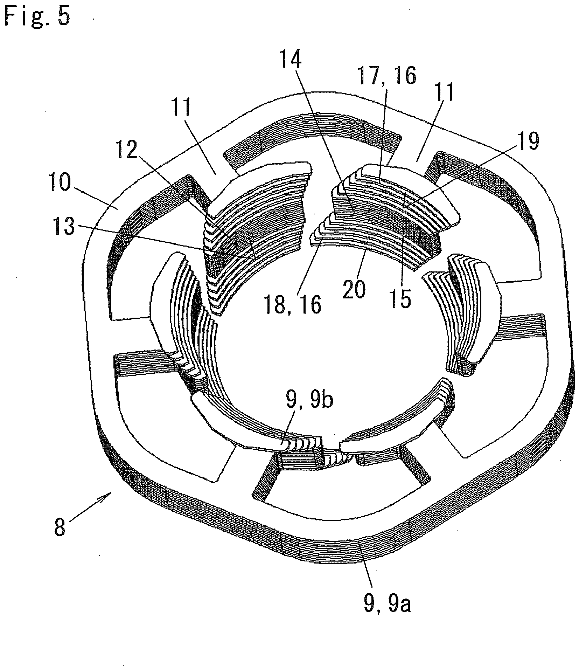

The motor **1** of the third embodiment is explained with attached Fig. 4 and 5. It is noted that the configurations of this embodiment in common with or equivalent to the configurations of the first embodiment or the second embodiment are symbolized by the same reference sign. Therefore, the repetitions of the explanations of them are omitted. In addition, the reference of the direction is defined similar to that in the first embodiment.

The motor **1** in this embodiment comprises the rotor **2**, the stator **6**, and the division wall **5** (not shown). As will be understood from Fig. 4 and Fig. 5, the stator **6** has the extending members **16** which have the magnetic pole surfaces **19, 20.** The magnetic pole surfaces **19, 20** are inclined with respect to the axial direction **Ax.** Each one of the magnetic pole surfaces **19, 20** is formed to have the size in the radial direction. Each the size in the radial direction gradually varies toward the axial direction **Ax.**

In addition, the second plate shape members **9b** of the first extending member **17** are stacked in the axial direction such that the second plate shape members **9b** are displaced in the radial outward direction and also are displaced in the circumferential direction at regular intervals. The extending tip is projected to the radial outward direction with respect to the base member **14,** and is projected to one direction of the circumferential direction of the above. Therefore, when the magnetic pole surface **19** of the first extending member **17** is seen in the radial direction passing the center of the magnetic pole surface, one end side is inclined to one direction in the circumferential direction. Consequently, when the magnetic pole surface **19** of the first extending member **17** is seen in the radial direction passing the center of the magnetic pole surface, the magnetic pole surface **19** of the first extending member **17** has approximately parallelogram shape which has the side inclined to one direction in the circumferential direction.

The second plate shape members **9b** of the second extending member **18** are stacked in the axial direction such that the second plate shape members **9b** are displaced in the radial outward direction and also are displaced in remaining one direction of the circumferential direction at regular intervals. The extending tip is projected to the radial inward direction with respect to the base member **14**, and is projected to the remaining one direction of the circumferential direction of the above. Therefore, when the magnetic pole surface **20** of the second extending member **18** is seen in the radial outward direction passing through the center of the magnetic pole surface **20**, the end side is inclined with respect to the remaining one direction of the circumferential direction. Consequently, when the magnetic pole surface **20** of the second extending member **18** is seen in the radial outward direction passing through the center of the magnetic pole surface **20**, the magnetic pole surface **20** of the second extending member **18** has an approximately parallelogram shape which has the side inclined to the other direction in the circumferential direction. (The other direction is opposite of one direction.)

In addition, the first extending member **17** and the second extending member **18** have the end sides which have the inclinations in the circumferential direction approximately equal to with each other. In addition, the directions of the projections of the extending tips in the circumferential direction are opposite of each other. The magnetic pole surfaces **19**, **20** of both the extending member **16** have approximately same shapes.

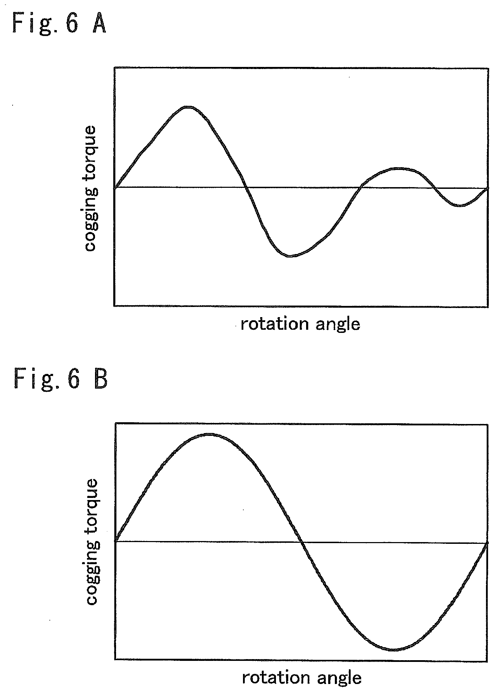

As explained above, the magnetic pole surfaces **19**, **20** of the extending member **16** are inclined to the circumferential direction, respectively. Consequently, the base members **14** are arranged next to each other in the circumferential direction and form the gap between them. The gap between the base members **14** extends approximately in parallel with the axial direction **Ax**. The extending members **16** are arranged next to each other in the circumferential direction and form the gap between them. The gap between the extending members **16** extends in a direction inclined with respect to the axial direction **Ax**. In addition, according to the gap inclined in the circumferential direction, for example, the number of the cogging is increased. Therefore, as shown in Fig. 6, it is possible to easily reduce the cogging torque, compared with the conventional product without the countermeasure with respect to the cogging torque.

It is noted that only one of the magnetic pole surfaces of two extending members **16** may be inclined to the circumferential direction.

### (FOURTH EMBODIMENT)

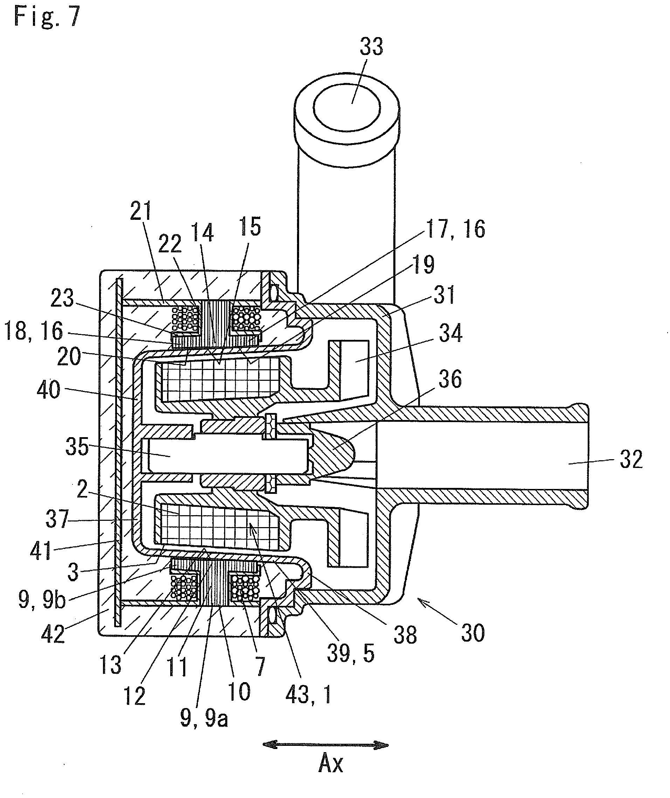

The pump **30** in the fourth embodiment is hereinafter explained with Fig. 7. It is noted that the configurations of this embodiment in common with or equivalent to the configurations of the fourth embodiment are symbolized by the same reference sign. Consequently, repetition of the explanations is omitted. In addition, the reference of the direction is defined similar to the first embodiment.

The pump **30** in this embodiment comprises a motor **43**, an impeller **34**, a controller **41**, a case **31**, and a division wall **37**. The motor **43** is defined as the driving source. The impeller **34** is driven to move by the motor **43**. Consequently, the impeller **34** moves the fluid. The controller **41** controls the motor **43**. The case **31** is defined as an outer envelope. The division wall **37** separates the stator **6** from the impeller **34**. In addition, the pump **30** comprises the pump chamber which is formed by the case **31** and the division wall **37.** The pump chamber incorporates the impeller **34** and the rotor **2** therein. The pump chamber is formed to pass the fluid therethrough.

The case **31** has a main body which comprises a side wall, a top plate, an inlet **32,** and an outlet **33.** The side wall has a cylindrical shape. The top plate is provided to one of the ends of the side wall to cover one of the ends of the side wall. The top plate has a shape of approximately circular disk. The inlet **32** is provided for taking the fluid in the pump chamber. The inlet **32** has a circular tube shape. The outlet **33** is provided for discharging the fluid to the outside of the pump chamber. The outlet **33** has a circular tube shape.

The inlet **32** is provided to an approximately center of the top plate such that the inlet **32** and the top plate are approximately concentric with respect to each other. The inlet **32** is projected to the outside of the case **31.** The outlet **33** is projected to the outside from the side wall. The side wall has a remaining end which is not covered by the top plate. The remaining end of the side wall is in contact with the division wall **37** (explained below) with the seal member (not shown) such as O-ring between "the division wall 37" and "the remaining end of the side wall". The impeller **34** is disposed in an inside of the side wall.

The impeller **34** comprises a shroud and a blade member. The shroud has a circular plate shape. The blade member is formed integrally with the shroud and located on the surface of the shroud. The blade member has a plurality of blades which are arranged in a circumferential direction of the shroud at approximately regular intervals. The blades are formed to radially extend in the radial outward direction. The blades next to each other in the circumferential direction form the fluid flow path for passing the fluid therebetween.

The shroud is disposed within the case **31** such that the shroud and the inlet **32** are set to be concentric with respect to each other. The axial member **35** having the circular cylinder is disposed in an approximately center of the circle of the shroud such that the axial member **35** penetrates through the approximately center of the shroud. The impeller **34** is set to be rotatable about the axial member **35**. Therefore, when the impeller **34** is rotated about the axial center defined by the axial member **35**, the fluid is taken in the pump chamber through the inlet **32**. In addition, the impeller **34** gives the centrifugal force to the fluid which is moved into the pump chamber through the inlet **32** to discharge the fluid to the outside of the pump chamber.

The axial member **35** has one end and the other end in the axial end, the one end of the axial member **35** being fixed to the attachment member **36** of the case **31**, the other end being fixed to the division plate **37**. In addition, the rotor **2** is attached to the circumference surface of the axial member **35**. The rotor **2** is supported by the axial member **35** to be rotatable about the axial member **35**.

The division plate **37** is made of resin material. The division plate **37** comprises a main body which comprises a cylindrical member **39** and a flange member **38**. The cylindrical member **39** is provided with a bottom member **40** to which the axial member **35** is attached. The cylindrical member **39** comprises an opening side which is defined at a position where an opening of the cylindrical member **39** is located. The flange member **38** is provided to the opening side of the cylindrical member **39**. The flange member **38** has a plate shape and extends in the radial outward direction. One of plate surfaces of the flange member **38** is faced to a ceiling member. The impeller **34** is disposed between the plate surface and the ceiling member. In addition, the outer circumferential end of the flange **38** is in contact with the side wall.

In addition, the cylindrical member **39** has the draft in the axial direction **Ax**. The cylindrical member **39** has an inside portion in which the rotor **2** is disposed such that the rotor **2** and the axial member **35** are approximately concentric with respect to each other. The stator **6** is disposed in a position of an outside of an outer circumference of the cylindrical member **39**. That is, the cylindrical member **39** acts as the division wall **5**. In addition, the control member **41** is disposed in an outside of the bottom **40** of the cylindrical member **39.** The portion in which the stator **6** and the control member **41** are disposed is defined as a portion of an outside of the division plate **37.** (The space in which the stator **6** and the control member **41** are disposed is defined as a space of an outside of the division plate **37**.) The portion of the outside of the division plate **37** is covered by the molding member **42**. (The space of the outside of the division plate **37** is covered by the molding member **42**.)

The molding member **42** comprises a main body which is made of material such as thermosetting resin and which is filled to the portion (the space) in which the stator **6** and the control member **41** are disposed. Consequently, the molding member is defined as a part of the outer envelope of the pump **30** in the portion. The molding member **42** is configured to fix the stator **6** and the control member **41** with the division plate **37**. In addition, the molding member **42** increases the strength of the division plate **37** against the pressure in the pump chamber. Furthermore, the molding member **42** reinforces the division plate **37**.

The control member **41** comprises a main component which comprises electronic components (not shown) and a substrate. The electronic components comprise, for example, a position detector and a switching element. The position detector is configured to detect a rotation position of the rotor **2**. The switching element is configured to control the electrical connection of the stator **6**. The substrate is provided for mounting the electrical components. The control member **41** is configured to receive detection results from the position detector and is configured to control the electrical current applied to the coil **7** according to the detection results. Consequently, the control member **41** controls the rotation of the motor **43**, whereby the control member controls and adjusts the operation of the pump **30**. (The control member controls and adjusts the operation of the impeller **34**.)

The stator **6** comprises the coil **7**, the core **8**, and the electrical insulation member **21**. The conducting wire of the coil **7** is electrically connected to the control member **41**. The core **8** is provided at its magnetic pole member **12** with the base member **14** and the extending member **16**. The magnetic pole surfaces **19**, **20** of the extending member **16** have inclinations with respect to the axial direction **Ax**.

As explained above, the pump **30** comprises the operation source which comprises the configurations of the motor **1** explained in the first embodiment. (The pump **30** comprises the motor **43** which comprises the configurations of the motor **1** explained in the first embodiment.) The magnetic pole surface **13** is faced to the circumference surface **3** of the rotor **2** to leave a space. The division plate **37** (the division wall **5**) is disposed in the space between the magnetic pole surface **13** and the circumference surface **3** of the rotor **2**. The impeller **34** is disposed in one end in the axial direction **Ax** of the rotor **2**.

Consequently, it is possible to prevent the growth in size of the operation source. Therefore, it is possible to reduce the air gap of the motor **43**. This results in the improvement of the efficiency of the motor. Consequently, it is possible to improve the efficiency of the pump. In addition, the molding member **42** is employed to fix the stator **6** to the division plate **37**. In addition, the division plate **37** is reinforced by the molding member **42**. Therefore, it is possible to reduce the thickness of the cylindrical member **39**. This results in the decrease of the air gap between the stator **6** and the rotor **2**. Furthermore, although the control member **41** and the stator **6** receive the electrical current when the pump **30** is operated, the control **41** and the stator **6** are divided from the pump chamber by the division plate **37**. In addition, the stator **6** and the division plate **37** are covered by the molding member **42**. Therefore, it is possible to prevent the penetration of "the moisture in the outside and the fluid in the pump chamber" to the control member **41** and the stator **6**.

Needless to say, the pump **30** may be realized by the operation source (the operation source) having the components in the motor **1** of the first embodiment to the third embodiment. Furthermore, the division plate **37** is not limited its material to the resin. That is, the division plate **37** may be made of metal. Furthermore, the inclination of the cylindrical member **39** is not limited to the draft.

In addition, the pump **30** is not limited to a volute pump shown in Fig. 7. The vortex pump may be used. In addition, the pump **30** is not limited to the centrifugal pump. It is possible to employ the axial flow pump which is configured to flow the fluid in the axial direction **Ax**. Furthermore, the pump **30** is not limited to the exemplifications of the above. In addition, the motor **43** having the outer rotor type may be employed to the pump **30**. Namely, the configuration of the pump **30** is not limited to the exemplification.

### (FIFTH EMBODIMENT)

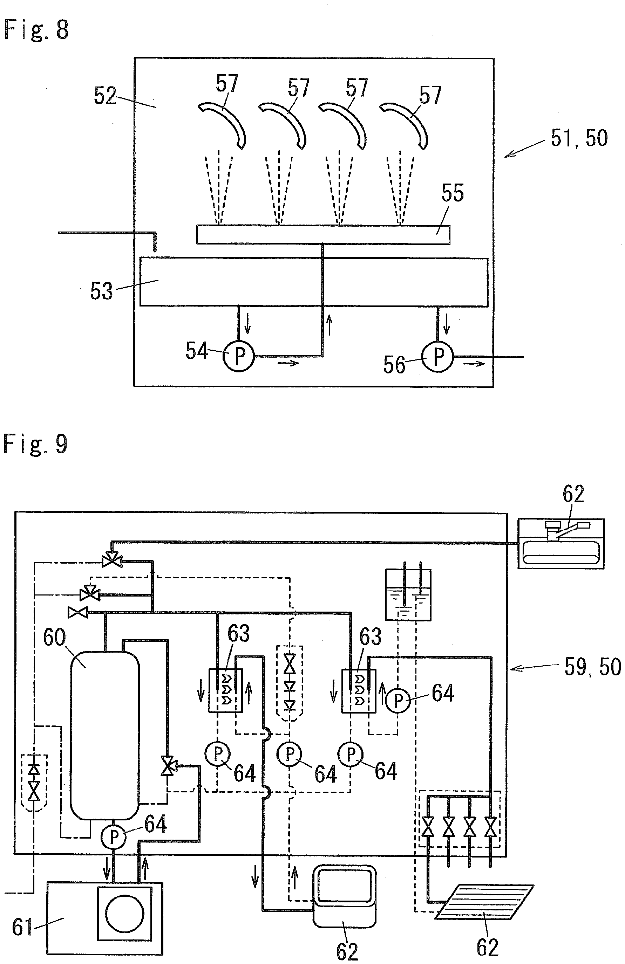

The apparatus **50** of the fifth embodiment is explained with Fig. 8. It is noted that the configurations of this embodiment in common with the configurations of the pump **30** of the fourth embodiment are symbolized by the same reference signs. Therefore, the repetition explanations are omitted.

The apparatus **50** of this embodiment is a dishwasher **51** which is configured to wash the dishes **57** with, for example, wash fluid having water, hot water, or a mixture of "the detergent" and "the water and the hot water". The dishwasher **51** is configured to take the wash solution in the tank **53** through the nozzle **55** by the wash water pump **54.** The nozzle **55** ejects the wash solution to the arrangement portion **52** for arranging the dishes **57**. Consequently, the dishes **57** in the arrangement portion **52** are washed. In addition, the tank **53** of the dishwasher **51** is located below the arrangement space **52.** The wash solution ejected to the arrangement space **52** is again moved into the tank **53**. The wash solution moved into the tank **53** is again ejected to the arrangement space **52** from the nozzle **55**. Consequently, the wash solution is repeatedly used. Furthermore, when the washing is finished, the wash water pump **54** is stopped. Then, the drain pump **56** is operated. Consequently, the wash solution **53** is drained away from the tank **53**. In addition, the wash water pump **54** and the drain pump **56** are realized by the pump **30** in the third embodiment.

As explained above, the dishwasher **51** employs the pump **30** in the fourth embodiment as the wash water pump **54** and the drain pump **56.** Consequently, it is possible to easily modify the configuration of the wash water pump **54** and the drain pump **56** to achieve the reduction of the cost, low noise, low vibration, and high efficiency. Therefore, it is possible to easily provide the dishwasher **51** of the low cost, the low noise, low vibration, and high efficiency.

### (SIXTH EMBODIMENT)

The apparatus **50** of the sixth embodiment is explained with Fig. 9. It is noted that the configurations of the apparatus **50** in common with or equivalent to the configurations of the pump **30** of the fourth embodiment are symbolized by the same reference signs. Therefore, the configurations are omitted their repetition explanations. The apparatus **50** in this embodiment is a heat supply system **59.** The heat supply system **59** comprises a storage unit **60**, a heat pump unit **61**, an output unit **62**, a heat exchanger **63**, and valve units. The storage unit **60** is provided for storing the water and the hot water. The heat pump unit **61** is configured to heat the water. The output unit **62** is, for example, a bath, a tap, a shower, or a floor panel heating. In addition, the heat supply system **59** comprises fluid pumps **64.** Each the pump is realized by the pump **30** in the third embodiment. The fluid pump **64** is configured to flow, for example, the water and the hot-water. In the heat supply system **59**, the fluid pumps **64** are operated and the valve units are controlled. Consequently, the water and the hot-water having desired temperatures are supplied to the output unit **62** at a desired flow rate. Then, the water and the hot-water are output from the output unit **62**.

As explained above, the heat supply system **59** employs the pump **30** in the fourth embodiment as the fluid pump **64**. Consequently, it is possible to easily construct the fluid pump **64** at low cost, low noise, low vibration, and high efficiency. Therefore, it is possible to easily produce the heat supply system **59** at low cost, low noise, low vibration, and high efficiency.

### (SEVENTH EMBODIMENT)

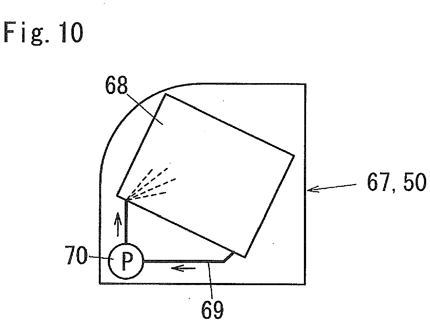

The apparatus **50** in the seventh embodiment is explained with Fig. 10. It is noted that the configurations of motor 1 in the first embodiment to third embodiment and the pump **30** in the fourth embodiment in common with or equivalent to the configurations of this embodiment are symbolized by the same reference sign. Therefore, the repetition explanations are omitted.

The apparatus **50** in this invention is a washing machine **67.** The washing machine **67** comprises a washing tub **68**, a drive unit (not shown), a water supply unit (not shown), and the circulation unit **69.** The washing tub **68** is shaped to contain the laundry such as clothes. The drive unit is configured to rotate the washing tub **68**. The water supply unit is configured to supply the water to the washing tub **68**. The circulation unit **69** is configured to circulate the water in the washing tub **68**. In the washing machine **67**, the drive unit is configured to rotate the washing tub **68**. In addition, the circulation unit **69** is configured to circulate the water in the washing tub **68**. Consequently, the washing machine **67** washes the laundries.

The drive unit is defined by the operation source realized by the motor. The motor defining the drive unit is realized by the motor **1** disclosed in the first to third embodiments. The circulation unit **69** comprises the circulation pump **70** for circulating the water in the washing tub **68**. The circulation pump **70** is realized by the pump **30** in the fourth embodiment.

As explained above, the washing machine **67** comprises the operation source defined by the motor **1** in the first to third embodiments. In addition, the circulation pump **70** is defined by the pump **30** in the fourth embodiment. Consequently, it is possible to easily employ the configuration for low cost, low noise, low vibration, and high efficiency. Therefore, it is possible to easily produce the washing machine **67** at low cost, low noise, low vibration, and high efficiency.

It is noted that the apparatus **50** is not limited to the apparatus **50** in the fifth to seventh embodiment. For example, the pump **30** in the fourth embodiment may be used as the circulation pump for circulation of the coolant. That is, the pump **30** may be applied to the cooling apparatus of the vehicle. Furthermore, the pump **30** may be used as the fluid pump for moving the fluid such as the fuel and the air. That is, the pump **30** may be applied to the fuel battery. In addition, for example, the apparatus may comprise the motor **1** of the first to the third embodiments without the pump **30** of the fourth embodiment.

As explained above, Fig. 1 shows a motor which comprises the stator **6**, the rotor **2**, and the division wall **5**. The stator **6** comprises the core **8**. The core **8** comprises a plurality of the plate like members **9** which are stacked. When the stator **6** receives the electrical current, the stator **6** generates the magnetic field. The rotor **2** comprises the magnet. Therefore, when the stator **6** generates the magnetic field, the magnet of the rotor **2** is rotated. In this manner, the rotor **2** is rotated by the stator **6**. The division wall **5** has a cylindrical shape. The division wall **5**, the rotor **2**, and the stator **6** are arranged in the radial direction of the center of the rotation axis. The division wall **5** is located between the rotor **2** and the stator 6**.** The division wall **5** is inclined with respect to the axial direction of the center of the rotation axis. Consequently, the division wall has the inclination with respect to the axial direction of the center of the rotation axis. The rotor **2** has the circumference surface **3** extending in the rotation direction of the rotor **2.** The core **8** has a magnetic pole member **12**. The magnetic pole member **12** has the magnetic pole surface **13**. The magnetic pole surface is located to be faced to the circumference surface **3** of the rotor through the division wall **5**. The magnetic pole member **12** has a base member **14**, the first extending member **17**, and the second extending member **18**. The base member **14** is provided to one end, in a side of the rotor **2**, of the core **8**. The base member **14** has one end and the other end in the axial direction of the rotor **2**. The one end of the base member **14** in the axial direction of the rotor **2** is defined as the first end, and the other end of the base member in the axial direction of the rotor **2** is defined as the second end.

The first extending member **17** extends in the axial direction of the rotor **2** from the one end in the axial direction of the base member **14.** In other words, the first extending member **17** extends in the axial direction of the rotor **2** from the first end of the base member **14.** The second extending member **18** extends in the axial direction of the rotor **2** from the other end in the axial direction of the base member. In other words, the second extending member **18** extends in the axial direction of the rotor **2** from the second end of the base member **14.**

The magnetic pole surface **13** of at least one of the first extending member **17** and the second extending member **18** has the inclination inclined with respect to the axial direction.

Consequently, it is possible to decrease the air gap. Therefore, it is possible to improve the efficiency of the motor **1.**

In addition, as will be understood from Fig. 1, the size in the radial direction of the magnetic pole surface **13** in the extending tip of the first extending member **17** is set to be greater than the size in the radial direction of the magnetic pole surface **13** in the extending tip of the second extending member **18.**

In addition, the magnetic pole surface **13** of the first extending member **17** has the inclination in parallel with the division wall **5.**

More specifically, the magnetic pole surface **13** of the first extending member **17** has a first magnetic pole portion faced to the division wall **5.** The first magnetic pole portion has the inclination in parallel with the division wall **5.**

In addition, the magnetic pole surface **13** of the second extending member **18** has the inclination in parallel with the division wall **5.**

In addition, the circumference surface of the rotor **2** has the inclination in parallel with the division wall.

More specifically, the magnetic pole surface **13** of the second extending member **18** has a second magnetic pole portion faced to the division wall **5.** The second magnetic pole portion has the inclination in parallel with the division wall.

In addition, as will be understood from Fig. 3, the circumference surface of the rotor **2** is in parallel with the magnetic pole surface **13** of the first extending member **17.**

Specifically, the circumference surface of the rotor has a first portion which is faced with the magnetic pole surface **13** of the first extending member **17.** The first portion of the circumference surface of the rotor has the inclination in parallel with the magnetic pole surface **13** of the first extending member **17.**

In addition, the circumference surface of the rotor **2** has the inclination in parallel with the magnetic pole surface **13** of the second extending member **18.**

Specifically, the circumference surface of the rotor has a second portion which is faced with the magnetic pole surface **13** of the second extending member **18.** The second extending member of the circumference surface of the rotor **2** has the inclination in parallel with the magnetic pole surface **13** of the second extending member **18.**

In addition, the second plate shape members **9b** of the first extending member **17** are stacked in the axial direction **Ax** such that the second plate shape members **9b** of the first extending member **17** are displaced in the circumferential direction of the rotor.

Specifically, the second plate shape members **9b** of the first extending member **17** are stacked in the axial direction such that the second plate shape members **9b** of the first extending member **17** are displaced in the circumferential direction of the rotor.

More specifically, the second plate shape member **9b** of the first extending member **17** are stacked in the axial direction **Ax** such that the second plate shape member **9b** of the second extending member **18** are displaced in one of the circumferential direction of the rotor.

In addition, the second plate shape member **9b** of the second extending member **18** are stacked in the axial direction **Ax** such that the second plate shape member **9b** of the second extending member **18** are displaced in the circumferential direction.

Specifically, the second plate shape members **9b** of the second extending member **18** are stacked in the axial direction **Ax** such that the second plate shape member **9b** of the second extending member **18** are displaced in the circumferential direction of the rotor.

More specifically, the second plate shape members **9b** of the second extending member **18** are stacked in the axial direction **Ax** such that the second plate shape member **9b** of the second extending member **18** are displaced in one of the circumferential direction of the rotor.

In addition, as will be understood from Fig. 7, the pump comprises the motor **1** as explained above.

In addition, as will be understood from Fig. 8, Fig. 9, and Fig. 10, the apparatus comprises the pump as explained above and the motor **1** as explained above.

Therefore, it is possible to produce the apparatus comprises the motor improved its efficiency and the pump improved its efficiency.

### REFERENCE SIGN LIST

- **1**: motor
- **2**: rotor
- **5**: division wall
- **6**: stator
- **8**: core
- **9**: plate like member
- **12**: magnetic pole member
- **13**: magnetic pole surface
- **14**: base member
- **15**: magnetic pole surface
- **17**: first extending member
- **18**: second extending member
- **19**: magnetic pole surface
- **20**: magnetic pole surface
- **Ax**: axial direction

## Claims

1. A motor comprising:
a stator (6) comprising a core (8) which has a plurality of plate members which are stacked;
a rotor (2) rotated by said stator (6); and
a division wall (5) located between said rotor (2) and said stator (6) in a radial direction of a rotation axis of said rotor (2), said division wall (5) having a cylindrical shape,
said division wall (5) having an inclination in an axial direction of a center of the rotation axis,
said rotor (2) having a circumference surface (3) along a rotation direction of said rotor (2), said core (8) comprising a magnetic pole member (12) which has a magnetic pole surface, said magnetic pole surface being faced to said circumference surface (3) through said division wall (5),
said magnetic pole member (12) comprising a base member (14), a first extending member (17), and a second extending member (18), said core (8) having an end portion which is located in a rotor side, said base member (14) being provided to said end portion, said first extending member (17) extending in the axial direction from a first portion in the axial direction of said end portion of said base member (14), said second extending member (18) extending in the axial direction from a second portion of said end portion in the axial direction of said base member (14), said second portion is opposite of said first portion,
said magnetic pole surface in at least one of said first extending member (17) and said second extending member (18) has the inclination with respect to the axial direction.

2. The motor as set forth in claim 1, wherein
said first extending member (17) has a tip, said second extending member (18) having a tip, a radial size of said magnetic pole surface (19) of said tip of said first extending member (17) being greater than a radial size of said magnetic pole surface (20) of said tip of said second extending member (18).

3. The motor as set forth in claim 1 or 2, wherein
said magnetic pole surface (19) of said first extending member (17) has said inclination such that said magnetic pole surface (19) of said first extending member (17) extends in parallel with said division wall (5), and
said magnetic pole surface (20) of said second extending member (18) has said inclination such that said magnetic pole surface (20) of said second extending member (18) extends in parallel with said division wall (5).

4. The motor as set forth in any one of claims 1 to 3, wherein
said circumference surface (3) has an inclination such that said circumference surface (3) extends in parallel with said division wall (5).

5. A pump (30) comprising the motor as set forth in any one of claims 1 to 4.

6. An apparatus (50) comprising the motor as set forth in any one of claims 1 to 4.

7. An apparatus (50) comprising the pump as set forth in claim 5.
